# EUROPEAN PATENT APPLICATION

(11) **EP 1 811 172 A1**
(43) Date of publication of application: **25.07.2007**
(21) Application number: 06396004.1
(22) Date of filing: 20.01.2006
(51) Int. Cl.: F03D 7/04

(54) **Method for measuring the wind of a wind power plant**

(71) Applicant: Winwind Oy, 00210 Helsinki (FI)
(72) Inventor: Böhmeke, Georg, 00210 Helsinki (FI)
(74) Representative: Helino, Timo Kalervo

(57) **Abstract**

A method for measuring the wind of a wind power plant, the wind power plant including, at the top of a mast (1), an engine room (2) arranged to be horizontally rotatable and provided with a generator, as well as a two- or more-blade rotor (3) substantially rotating in a vertical plane and connected to the shaft of the generator and arranged to rotate it, whereby placed in the exhaust stream of the rotor is a measuring device (4, 5) providing the measurement signal for measuring the direction and velocity of the wind. In the method of the invention, those blade angle areas of the rotor (3) blades (6) are determined in which the blades have an effect interfering with the measurement signal; and in those blade angle areas, the measurement signal given by the measuring device (4, 5) is ignored.

## Description

### FIELD OF THE INVENTION

The invention relates to a method for measuring the wind of a wind power plant as defined in the preamble of claim 1.

### BACKGROUND OF THE INVENTION

At present, conventionally, the control of wind power plants uses at least one, often two wind gauges. Most often, these include conventional cup anemometers or ultrasound anemometers. The measured wind velocity is utilised in the control of a wind power plant, particularly in start up and stop, but is also used for continuously comparing the nominal power and effective power to reveal a possible problem concerning the power or an inaccurate measurement value given by an anemometer.

Weather vanes having an electric output signal are usually used as directional sensors of wind. An ultrasound anemometer can also provide the direction of the wind. The directional signals of wind serve the purposes of direction-monitoring of the plant, as well as the purposes of stopping to be made due to an abrupt change in the wind direction.

The presently used wind power plants, with the rotor in front of the tower, have the disadvantage that the devices for measuring the wind velocity and direction, which are placed outside the engine room behind the rotor and supported by the former, function in the exhaust stream of the rotor.

The exhaust stream of the rotor does not correspond to the actual wind affecting the rotor blades, but represents a varying and turbulent flow both with respect to the velocity and direction. In particular, each rotor blade creates exhaust stream turbulence that hits the measuring device as soon as it has passed by the blade.

The repeated, long-lasting deviations in the measurement results are corrected using a calibration curve, which is obtained from the measurements of a separate wind measuring mast by comparing the results given by that mast to those given by the anemometer and weather vane of the plant.

### OBJECTIVE OF THE INVENTION

It is an objective of the invention to alleviate the aforementioned inaccuracies.

One specific objective of the invention is to disclose a new type of measurement method enabling one to measure both the direction and velocity of the wind affecting the rotor of a wind power plant in a most undisturbed and accurate manner.

### SUMMARY OF THE INVENTION

The measurement method of the invention is characterised by what has been described in claim 1.

The method for measuring the wind of a wind power plant concerns a wind power plant including, at the top of a mast, an engine room arranged to be horizontally rotatable and provided with a generator, as well as a two- or more-blade rotor substantially rotating in a vertical plane and connected to the shaft of the generator and arranged to rotate it. Furthermore, there is in the exhaust stream of the rotor a measuring device providing the measurement signal for measuring the direction and velocity of the wind. According to the invention, those blade angle areas in which the blades have an effect interfering with the measurement signal are determined; and in those blade angle areas, the measurement signal given by the measuring device is ignored. In other words, the measurement signals obtained from the flow conditions caused by the blades and deviating from the normal are not taken into account in the control of a wind power plant, but these momentarily erroneous signals are disallowed.

In one embodiment of the invention, for the duration of the aforementioned blade angle area, the measurement signal is locked into the momentary value that was prevailing prior to the start of the blade angle area. In this manner, while the rotor blade is disposed in front of the measuring device, affecting the air flow entering the measuring device, the new measurement signal is not obtained from the measuring device, but is replaced with previously obtained information.

Because even an undisturbed air flow can be relatively varying and irregular, it is also possible that the measurement signal is not locked into the momentary value that was prevailing prior to the start of the blade angle area, but into a suitable average value, determined over a given period of time prior to the locking.

In another embodiment of the invention, placed in the exhaust stream of the rotor are at least two separate measuring devices at a distance from each other so that their above-mentioned blade angle areas are not overlapping, i.e. they are not disposed one upon the other in the direction of air flow. In that case the measurement signal being used is obtained in a periodically varying manner always from the measuring device that is disposed outside the aforementioned blade angle area in an undisturbed air flow. In other words, with two or more measuring devices, suitably placed at a distance from each other, there always is a measuring device in an undisturbed air flow so that accurate measurement information is obtained from it. In this manner, the measurement signal used for the control of a wind power plant is compiled from a signal given by two or more measuring devices.

The method for measuring the wind of a wind power plant has several advantages compared to the prior art. The adjustment of the wind power plant can be made more accurate and faster because the information to be utilised in the control always is correct and interference-free. The benefit obtained by the method is of special importance in abrupt direction deviations of the wind because the directional signal becomes more dependable, enabling sharper monitoring limits when processing fast wind direction changes.

### LIST OF FIGURES

In the following section, the invention will be described in detail by means of examples of its embodiments with reference to the accompanying drawing, in which
Fig. 1 represents a wind power plant utilising the measurement method of the invention;
Fig. 2 schematically represents one embodiment of the invention; and
Fig. 3 schematically represents another embodiment of the invention.

### DETAILED DESCRIPTION OF THE INVENTION

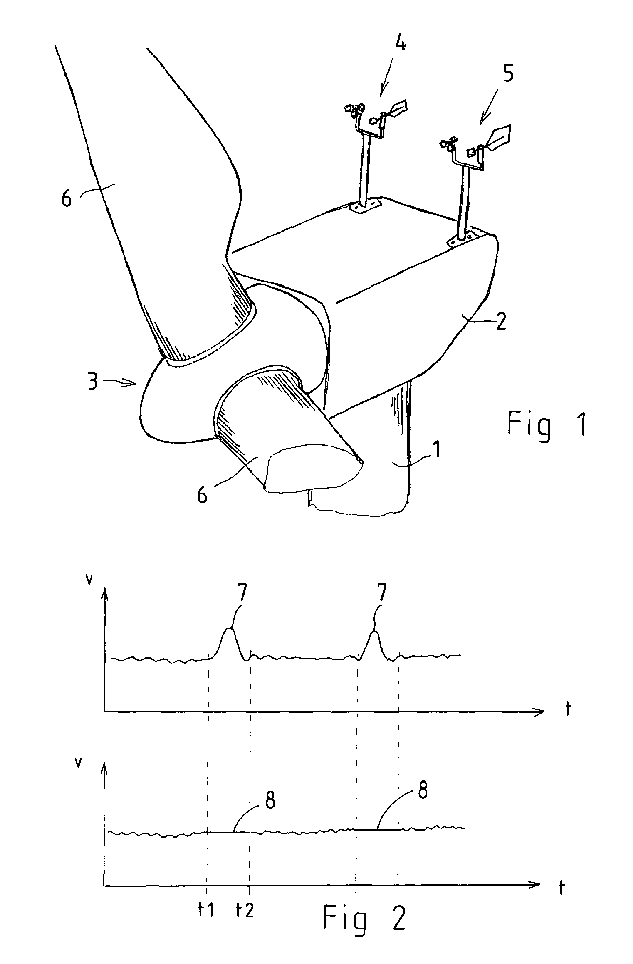

Fig. 1 shows a wind power plant including, at the top of a mast 1, an engine room 2 comprising a generator. The engine room 2 is arranged to be swivelling in a horizontal plane with respect to the mast. Connected to the shaft of the generator is a rotor 3, which rotates the generator and rotates in a substantially vertical plane, the rotor having three blades 6 spaced at uniform intervals, i.e. at intervals of 120 degrees. Attached to the top of the engine room 2, to the outer surface thereof, are two measuring devices 4 and 5, placed as far as possible from each other, i.e. to the fringes of the engine room, in a plane parallel to the direction of rotation of the blades.

The measuring devices 4 and 5 are disposed behind the rotor 3 in the direction of flow of the wind, in other words in the exhaust stream of the rotor. The measuring devices are provided with sensors for measuring both the velocity and direction of the wind.

The air flow being directed to the blade 6 makes the rotor rotate, and at the same time the blade affects the exhaust stream thereafter so that the velocity of the exhaust stream is smaller than the velocity of the flow being directed to the blade from the front, and the direction of the exhaust stream is deviating from that of the flow from the front. At the same time there is irregular swirling in the exhaust stream. However, the distance of the measuring devices from one another is so big that the exhaust stream leaving an individual blade is never directed to both measuring devices at the same time. In this manner, one or the other of the measuring devices 4 and 5 always receives, between two blades, an air flow having the original direction and velocity.

Fig. 2 shows the method of the invention in a situation where just one measuring device 4 is used. The upper curve of Fig. 2 shows the velocity of the wind measured by the measuring device as a function of time. The velocity of the wind is relatively regular, but there is interference 7 in the measurement signal every time the blade passes by the measuring device. This is eliminated so that those blade angles are determined between which there is interference appearing and the signal to be obtained from the measuring device during that period of time t1 - t2 is replaced with a standard signal 8, having the same magnitude as the momentary signal value that was prevailing prior to the start of the aforementioned blade angle area.

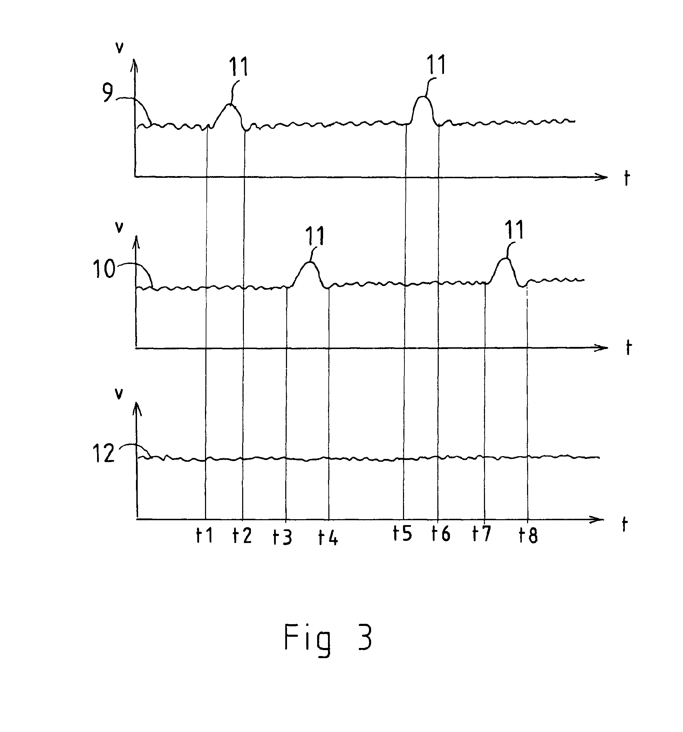

Another embodiment of the invention is shown in Fig. 3, and it enables a continuous, uninterrupted adjustment. The method uses two measuring devices, giving measurement signals 9 and 10, corresponding to one another and describing the velocity of the wind in the exhaust stream of the rotor. Both signals 9 and 10 have similar interference 11 caused by the blades, but the measuring devices have been so placed in the exhaust stream that the interferences never occur simultaneously but at different times by turns. In this manner, according to the invention, the signals 9 and 10 given by the measuring devices are combined to form a resultant signal 12 so that the part of the signal including interference is always replaced by an interference-free signal of the other signal.

The replacement can happen so that the first one of the signals 9 is regarded as the main signal and only its interference part t1-t2 is replaced with the corresponding part of the other signal.

Another possibility is that the resultant signal 12 is formed in half from both signals 9 and 10 by exchanging the signal to be included into the resultant signal every time just before the interference 11, i.e. signal 10 between t1- t3; signal 9 between 73 - t5; signal 10 between t5 - t7, etc. In this manner, the interference certainly has time to be suppressed before the signal is again introduced as a part of the resultant signal, and a most interference-free and correct measurement result is obtained from the wind being directed to the rotor.

The examples referred to above describe the measurement of wind velocity, but exactly in the same manner is also made the measurement of the wind direction using the method of the invention.

The invention is not limited merely to the examples of its embodiments; instead many variations are possible within the scope of the inventive idea defined by the claims.

## Claims

1. A method for measuring the wind of a wind power plant, the wind power plant including, at the top of a mast (1), an engine room (2) arranged to be horizontally rotatable and provided with a generator, as well as a two- or more-blade rotor (3) substantially rotating in a vertical plane and connected to the shaft of the generator and arranged to rotate it, whereby placed in the exhaust stream of the rotor is a measuring device (4, 5) providing the measurement signal for measuring the direction and velocity of the wind, **characterised in that** those blade angle areas in which the blades have an effect interfering with the measurement signal are determined; and in those blade angle areas, the measurement signal given by the measuring device (4, 5) is ignored.

2. The measurement method as defined in claim 1, **characterised in that** for the duration of the aforementioned blade angle area, the measurement signal is locked into the momentary value that was prevailing prior to the start of the blade angle area.

3. The measurement method as defined in claim 1, **characterised in that** for the duration of the aforementioned blade angle area, the measurement signal is locked into the average value that was prevailing prior to the start of the blade angle area.

4. The measurement method as defined in claim 1, **characterised in that** placed in the exhaust stream of the rotor (3) are at least two separate measuring devices (4, 5) at a distance from each other so that their above-mentioned blade angle areas are not overlapping, whereby the measurement signal being used is obtained in a periodically varying manner always from the measuring device that is disposed outside the aforementioned blade angle area in an undisturbed air flow.

5. The measurement method as defined in claim 1, **characterised in that** the method is used to measure the direction of the wind.

6. The measurement method as defined in claim 1, **characterised in that** the method is used to measure the velocity of the wind.
